# EUROPÄISCHE PATENTSCHRIFT

(11) **EP 3 467 899 B1**
(45) Veröffentlichungstag und Bekanntmachung des Hinweises auf die Patenterteilung: **20.05.2020**
(21) Anmeldenummer: 17194893.8
(22) Anmeldetag: 05.10.2017
(51) Int. Cl.: H01M 2/10

(54) **AKKUPACK FÜR MEHRERE AKKUS**
BATTERY PACK FOR MULTIPLE BATTERIES
BLOC-BATTERIE POUR UNE PLURALITÉ DES BATTERIES

(43) Veröffentlichungstag der Anmeldung: 10.04.2019
(73) Patentinhaber: aentron GmbH, 82205 Gilching (DE)
(72) Erfinder: De Roche, John, 81369 München (DE)
(74) Vertreter: Keilitz, Wolfgang

(56) Entgegenhaltungen:
- DE-A1- 10 055 620
- US-A1- 2009 104 516
- US-A1- 2014 212 737

## Beschreibung

Die Erfindung betrifft einen Akkupack für mehrere angeordnete Akkus gemäß dem Oberbegriff des Patentanspruchs 1.

Aus dem Stand der Technik sind Akkupacks für sogenannte Rundzellen (z. B. vom Typ 18650) bekannt, bei denen die Rundzellen in Reihen und Spalten nebeneinander in einzelnen Fächern angeordnet sind. Je nach Anzahl der Fächer können somit Akkupacks mit einer Gesamtleistung von mehreren Wh bis zu mehreren kWh hergestellt werden. Bekannte Akkupacks umfassen üblicherweise zwei Halter, von denen ein erster als Bodenteil und der zweite als Deckelteil dient. Jeder Halter umfasst eine Vielzahl von Fächern, die jeweils einen Akku aufnehmen.

Akkus verschiedener Hersteller unterscheiden sich üblicherweise geringfügig im Durchmesser. Akkus mit einem kleineren Durchmesser sitzen dann mit Spiel in den Fächern der Halter und können sich geringfügig im Fach bewegen. Dies kann dazu führen, dass der elektrische Kontakt der Akkus im Laufe der Zeit abreißt oder die Akkus beispielsweise durch Vibration mechanisch beschädigt werden. Außerdem werden die Assemblierung der Akkus und deren Kontaktierung erschwert.

Aus der US 2009/104516 A1, der DE 100 55 620 A1 sowie der US 2014/212737 A1 sind jeweils Akkupacks bekannt, in denen die einzelnen Akkus in Fächern eines Halters angeordnet sind.

### AUFGABE DER ERFINDUNG

Es ist daher eine Aufgabe der vorliegenden Erfindung, einen Akkupack für eine Vielzahl von Akkus zu schaffen, bei dem auch Akkus mit unterschiedlichen Durchmessern / Toleranzen fest in ihrem Fach gehalten werden.

Gelöst wird diese Aufgabe gemäß der Erfindung durch die im Patentanspruch 1 angegebenen Merkmale. Weitere Ausführungsformen der Erfindung ergeben sich aus den Unteransprüchen.

Gemäß der Erfindung wird ein Akkupack für eine Vielzahl von Akkus vorgeschlagen, der wenigstens einen ersten und einen zweiten Halter mit einer Vielzahl von Fächern aufweist, die jeweils zur Aufnahme eines ersten bzw. zweiten Endabschnitts der Akkus ausgebildet sind. Die Fächer haben an ihrer Außenseite jeweils eine Öffnung, über die ein im Fach angeordneter Akku kontaktiert werden kann. Darüber hinaus sind an der Außenseite der beiden Halter jeweils Kontaktbleche angeordnet, die gleichzeitig mehrere der Akkus kontaktieren. Um sicherzustellen, dass alle Akkus fest in den Fächern der Halter gehalten werden, wird vorgeschlagen, die einzelnen Fächer mit einer konkaven oder gestuften Innenkontur auszustatten. Akkus mit einem etwas kleineren Durchmesser sitzen dann etwas tiefer in den Fächern, während Akkus mit einem geringfügig größeren Durchmesser etwas weiter oben sitzen. Aufgrund der konischen Form der Fächer werden alle Akkus fest in den Fächern gehalten.

Um die Kontaktbleche an der Außenseite der Halter einfach positionieren zu können, umfassen die Halter vorzugsweise Führungen, mit denen die Kontaktbleche einfach und schnell aufgesetzt werden können. Nach dem Aufsetzen der Kontaktbleche wird die elektrische Verbindung zwischen Kontaktblech und Akkus vorzugsweise durch ein Schweißverfahren hergestellt. Ein solcher Akkupack bietet den wesentlichen Vorteil, dass die einzelnen Akkus einfach und schnell elektrisch verbunden werden können und der Verbindungsprozess gut automatisiert werden kann.

Gemäß einer Ausführungsform der Erfindung kann auf eine Löt- oder Schweißverbindung zwischen Kontaktblech und Akkus verzichtet werden, indem die elektrische Verbindung rein durch einen mechanischen Kontakt hergestellt wird. Die Kontaktbleche könnten zu diesem Zweck beispielweise an den Positionen der einzelnen Akkus jeweils Vorsprünge aufweisen und unter Spannung auf die Akkus aufgesetzt werden. Die Halter können in diesem Fall derart ausgebildet sein, dass die Kontaktbleche unter Spannung mechanisch einrasten. Alternativ könnten die Kontaktbleche auch unter Spannung festgeschraubt oder anderweitig an den Haltern befestigt werden.

Die an den Haltern vorgesehenen Führungen für die Kontaktbleche können z. B. als Positioniervorsprünge ausgebildet sein. Die Kontaktbleche können wiederum korrespondierende Öffnungen aufweisen, in die die Positioniervorsprünge eingreifen.

Die in den Haltern vorhandenen Fächer haben vorzugsweise eine Innenkontur, die im Wesentlichen an den Querschnitt der Akkus angepasst ist. Im Falle von Rundzellen ist der Querschnitt der einzelnen Fächer vorzugsweise ebenfalls rund. Bei prismatischen Zellen ist der Querschnitt entsprechend prismatisch.

Die Fächer sind vorzugsweise so dimensioniert, dass ein Akku jeweils nur zum Teil in ein Fach hineingesteckt werden kann, und zwar nur so weit, dass die Halter bei eingesetzten Akkus im Abstand zueinander angeordnet sind. Im zusammengebauten Zustand stecken dann nur die Endabschnitte der Akkus in den Fächern, während ein mittlerer Abschnitt der Akkus frei bleibt. Dies hat den Vorteil, dass die im Akkupack entstehende Verlustwärme somit wesentlich besser abgeführt werden kann.

Die vorstehend genannten Kontaktbleche sind vorzugsweise so groß dimensioniert, dass wenigstens vier Akkus kontaktiert werden.

Gemäß einer speziellen Ausführungsform der Erfindung kann an einem der Halter auch eine Elektronik zum Steuern des Ladens oder Entladens der Akkus vorgesehen sein. Die Elektronik umfasst vorzugsweise ein so genanntes Batteriemanagementsystem und kann beispielsweise an einem der Halter festgeschraubt sein.

Gemäß einer bevorzugten Ausführungsform der Erfindung sind die Halter als Module ausgebildet, die zu größeren Einheiten miteinander gekoppelt werden können. Die einzelnen Halter können beispielsweise eine Kupplung aufweisen, mit deren Hilfe mehrere Halter miteinander gekoppelt werden können. Die Kupplungen sind vorzugsweise seitlich an den Haltern angeordnet, so dass mehrere Halter nebeneinanderliegend gekoppelt werden können. Damit können in einfacher Weise im Grunde beliebig große Akkupacks hergestellt werden.

### KURZE BESCHREIBUNG DER ZEICHNUNGEN

Die Erfindung wird nachstehend anhand der beigefügten Zeichnungen beispielhaft näher erläutert. Es zeigen:
- Fig. 1: eine Seitenansicht zweier Halter eines Akkupacks;
- Fig. 2: eine Seitenansicht eines Akkupacks mit darin eingesetzten Akkus;
- Fig. 3: eine Aufsicht auf einen Halter eines Akkupacks;
- Fig. 4a,4b: eine Schnittansicht eines Akkufachs gemäß einer ersten und einer zweiten Ausführungsform der Erfindung; und
- Fig. 5: eine Aufsicht auf ein Kontaktblech.

### AUSFÜHRUNGSFORMEN DER ERFINDUNG

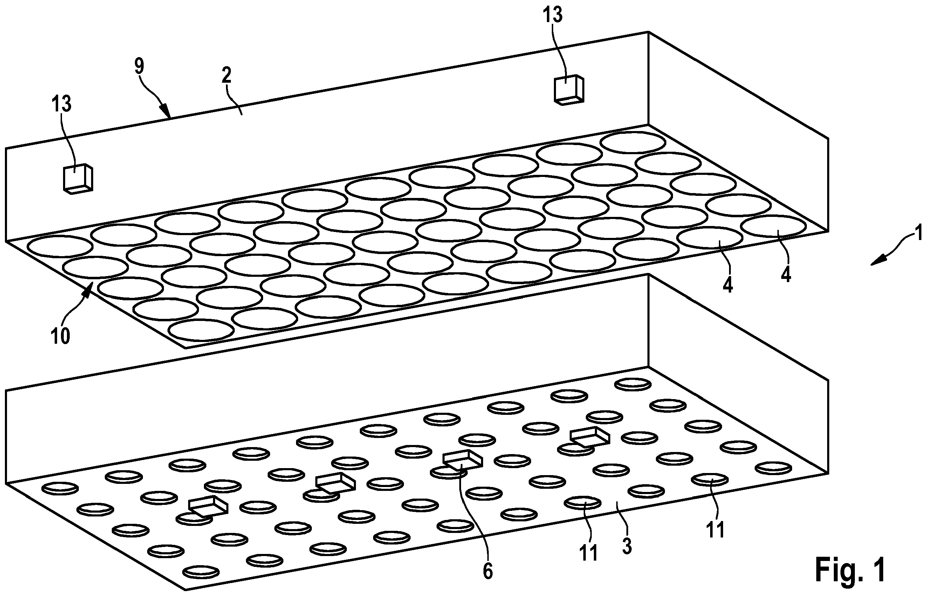

Fig. 1 zeigt eine Seitenansicht zweier Halter 2, 3 eines Akkupacks 1, die zur Aufnahme einer Vielzahl von Rundzellen ausgebildet ist. Jeder der Halter 2, 3 hat an seiner Innenseite mehrere Fächer 4, die jeweils zur Aufnahme eines ersten bzw. zweiten Endabschnitts der Akkus 8 ausgebildet sind. Die Innenkontur der Fächer 4 ist dabei so ausgelegt, dass die einzelnen Akkus 8 nur zum Teil in die Fächer 4 eingesteckt werden können und - abhängig vom Durchmesser der Akkus - in einer bestimmten Tiefe mechanisch festgeklemmt werden.

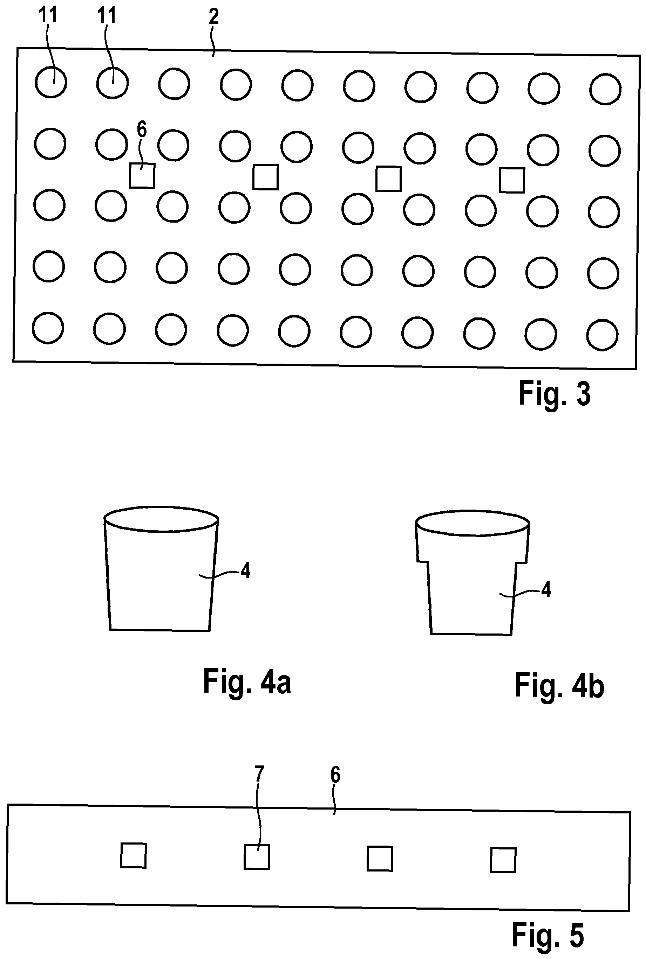

Gemäß einer ersten Ausführungsform der Erfindung kann die Innenkontur der Fächer 4 beispielsweise konkav ausgebildet sein, wie in Fig. 4a dargestellt ist. Gemäß einer zweiten Ausführungsform der Erfindung kann die Innenkontur der Fächer 4 auch gestuft ausgebildet sein, wie in Fig. 4b dargestellt ist. Somit können auch Akkus 8, die aufgrund von Fertigungstoleranzen leicht unterschiedliche Querschnitte bzw. Durchmesser aufweisen, spielfrei in den einzelnen Fächern 4 gehalten werden.

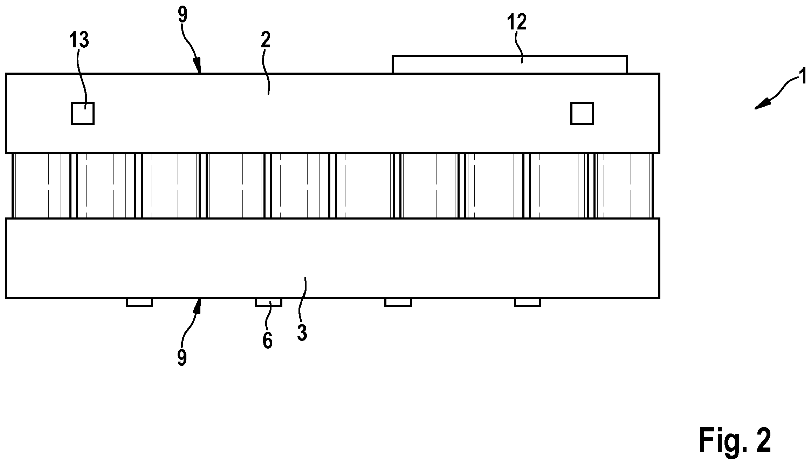

Wie in Fig. 2 dargestellt ist, dient einer der Halter (Halter 3) als Bodenteil und der andere Halter (Halter 2) als Deckelteil. Ein mittlerer Abschnitt der Akkus 8 bleibt im zusammengebauten Zustand des Akkupacks frei.

Fig. 2 zeigt außerdem noch eine Elektronik 12, die an dem Halter 2 befestigt ist. Die Elektronik 12 dient insbesondere zum Steuern des Ladens oder Entladens der Akkus 8. Sie kann z. B. das Batteriemanagementsystem des Akkupacks 1 enthalten.

In Fig. 3 ist zu erkennen, dass die Fächer 4 an ihrer Außenseite 9 jeweils eine Öffnung 11 aufweisen, über die die in den Fächern 4 angeordneten Akkus 8 elektrisch kontaktiert werden können. Zur Herstellung einer elektrischen Verbindung zwischen mehreren Akkus 8 sind hier Kontaktbleche 5 vorgesehen. Eine beispielhafte Ausführungsform eines Kontaktblechs 5 ist in Fig. 5 dargestellt.

Um die Kontaktbleche 5 schnell und einfach positionieren zu können, sind an der Außenseite 9 der beiden Halter 2, 3 jeweils Führungen 6 vorgesehen, die mit entsprechenden Öffnungen 7 der Kontaktbleche 5 zusammenwirken. Im dargestellten Ausführungsbeispiel sind die Führungen 6 als Positioniervorsprünge bzw. Zapfen ausgebildet, die in entsprechende Öffnungen 7 der Kontaktbleche 5 eingreifen. Die Kontaktbleche 5 können an den Positionen der Akkus 8 bzw. Öffnungen 11 jeweils einen Vorsprung aufweisen (nicht gezeigt), der in die entsprechende Öffnung 11 des Halters 2, 3 hineinragt. Nach dem Positionieren der Kontaktbleche 5 auf den Haltern 2,3 werden sie vorzugsweise festgeschweißt.

Gemäß einer bevorzugten Ausführungsform der Erfindung sind jeweils mehrere Kontaktbleche 5 pro Halter 2, 3 vorgesehen.

An den Seitenflächen des Halters 3 sind hier außerdem Kupplungen 13 vorgesehen, mit denen mehrere Halter 2, 3 zu einer größeren Einheit gekoppelt werden können. Die Kupplungen 13 sind hier als hakenförmige Elemente ausgebildet, die mit korrespondierenden Elementen an einem benachbarten Halter 2, 3 zusammenwirken. Es könnten aber auch verschraubbare Kupplungen oder dgl. vorgesehen sein. Dadurch können in einfacher Weise auch größere Akkus mit einer höheren Leistung von mehreren 100 Wh bis zu einigen kWh hergestellt werden.

## Patentansprüche

1. Akkupack (1) für mehrere Akkus (8), umfassend einen ersten und einen zweiten Halter (2, 3) mit mehreren Fächern (4), die jeweils zur Aufnahme eines ersten bzw. zweiten Endabschnitts der Akkus (8) ausgebildet sind, wobei die Fächer (4) an ihrer Außenseite (9) jeweils eine Öffnung (11) aufweisen, über die ein im Fach (4) angeordneter Akku (8) kontaktiert werden kann, und wobei an der Außenseite (9) der Halter (2, 3) Kontaktbleche (5) zum gleichzeitigen Kontaktieren mehrerer Akkus (8) vorgesehen sind,
**dadurch gekennzeichnet, dass**
die Fächer (4) eine konische und/oder gestufte Innenkontur mit einem in Einsteckrichtung der Akkus (8) kleiner werdenden Querschnitt aufweisen, so dass Akkus (8) mit einem kleineren Durchmesser etwas tiefer in den Fächern (4), und Akkus (8) mit einem geringfügig größeren Durchmesser etwas weniger tief in den Fächern (4) sitzen.

2. Akkupack (1) nach Anspruch 1, **dadurch gekennzeichnet, dass** an der Außenseite (9) der Halter (2, 3) Führungen (6) zum Positionieren der Kontaktbleche (5) vorgesehen sind.

3. Akkupack (1) nach Anspruch 1, **dadurch gekennzeichnet, dass** die Kontaktbleche (5) Öffnungen (14) umfassen, die mit den Führungen (6) der Halter (2, 3) korrespondieren.

4. Akkupack (1) nach einem der vorhergehenden Ansprüche, **dadurch gekennzeichnet, dass** die Fächer (4) eine Innenkontur aufweisen, die so ausgebildet ist, dass das Ende eines Akkus (8) jeweils festgeklemmt wird und die Halter (2, 3) mit eingesetzten Akkus im Abstand zueinander angeordnet sind, so dass ein mittlerer Abschnitt der Akkus (8) frei bleibt.

5. Akkupack (1) nach einem der vorhergehenden Ansprüche, **dadurch gekennzeichnet, dass** die Kontaktbleche (5) zum gleichzeitigen Kontaktieren von wenigstens vier Akkus (8) ausgebildet sind.

6. Akkupack (1) nach einem der vorhergehenden Ansprüche, **dadurch gekennzeichnet, dass** an einem der Halter (2, 3) eine Elektronik (12) zum Steuern des Ladens oder Entladens der Akkus (8) befestigt ist.

7. Akkupack (1) nach einem der vorhergehenden Ansprüche, **dadurch gekennzeichnet, dass** die Halter (2, 3) eine Kupplung (13) aufweisen, mit deren Hilfe mehrere Halter (2, 3) gekoppelt werden können.

## Claims

1. Battery pack (1) for a plurality of batteries (8), comprising a first and a second holder (2, 3) with a plurality of compartments (4), each of which is formed to accommodate a first or second end portion of the batteries (8), wherein the compartments (4) each have an opening (11) on their outside (9) through which a battery (8) which is arranged in the compartment (4) can be contacted, and wherein there are contact plates (5) provided on the outside (9) of the holder (2, 3) for simultaneously contacting of several batteries (8), **characterized in that** the compartments (4) have a concave and / or stepped inner contour having a cross section which decreases in the direction of insertion of the batteries (8), so that batteries (8) having a smaller diameter sit a little deeper in the compartments (4), and batteries (8) having a slightly larger diameter sit a little less deep in the compartments (4).

2. Battery pack (1) according to claim 1, **characterized in that** guides (6) for positioning the contact plates (5) are provided on the outside (9) of the holders (2, 3).

3. Battery pack (1) according to claim 1, **characterized in that** the contact plates (5) comprise openings (14) which correspond to the guides (6) of the holders (2, 3).

4. Battery pack (1) according to one of the preceding claims, **characterized in that** the compartments (4) have an inner contour which is formed such that the end of a battery (8) is clamped and the holders (2, 3) with the batteries inserted therein are arranged at a distance from one another, so that a central portion of the batteries (8) remains free.

5. Battery pack (1) according to one of the preceding claims, **characterized in that** the contact plates (5) are formed for simultaneously contacting of at least four batteries (8).

6. Battery pack (1) according to one of the preceding claims, **characterized in that** an electronics unit (12) for controlling the charging or discharging of the batteries (8) is attached on one of the holders (2, 3).

7. Battery pack (1) according to one of the preceding claims, **characterized in that** the holders (2, 3) have a coupling (13) by means of which several holders (2, 3) can be coupled.

## Revendications

1. Bloc-batterie (1) destiné à plusieurs batteries (8), comprenant un premier et un second support (2, 3) dotés de plusieurs compartiments (4), qui sont respectivement conçus pour la réception d'un premier, respectivement, d'une second segment d'extrémité de la batterie (8), où les compartiments (4) présentent respectivement un orifice (11) sur leur côté extérieur (9), par lequel la batterie (8) disposée dans le compartiment (4) peut être mise en connexion, et où des plaques de contact (5) sont prévues sur le côté extérieur (9) des supports (2, 3) pour un connexion simultanée de plusieurs batteries (8),
**caractérisé en ce que**
les compartiments (4) présentent un contour intérieur conique et/ou étagé avec une section transversale devenant plus petite dans la direction d'insertion de la batterie (8) de sorte que des batteries (8) avec un diamètre plus petit se situent un peu plus en profondeur dans les compartiments (4) et des batteries (8) avec un diamètre légèrement plus grand se situent un peu moins en profondeur dans les compartiments (4).

2. Bloc-batterie (1) selon la revendication 1, **caractérisé en ce que** des guides (6) pour le positionnement des plaques de contact (5) sont prévus sur le côté extérieur (9) des supports (2, 3).

3. Bloc-batterie (1) selon la revendication 1, **caractérisé en ce que** les plaques de contact (5) comprennent des orifices (14) qui correspondent aux guides (6) des supports (2, 3).

4. Bloc-batterie (1) selon l'une des revendications précédentes, **caractérisé en ce que** les compartiments (4) présentent un contour intérieur qui est conçu de telle manière que l'extrémité d'une batterie (8) est respectivement bloquée et les supports (2, 3) sont disposés à distance les uns par rapport aux autres avec des batteries insérées de sorte qu'une section centrale des batteries (8) reste libre.

5. Bloc-batterie (1) selon l'une des revendications précédentes, **caractérisé en ce que** les plaques de contact (5) sont conçues pour la connexion simultanée d'au moins quatre batteries (8).

6. Bloc-batterie (1) selon l'une des revendications précédentes, **caractérisé en ce qu'**une électronique (12) pour la commande de la charge ou de la décharge des batteries (8) est fixée sur l'un des supports (2, 3).

7. Bloc-batterie (1) selon l'une des revendications précédentes, **caractérisé en ce que** les supports (2, 3) présentent un accouplement (13) avec l'aide duquel plusieurs supports (2, 3) peuvent être accouplés.
